**Europäisches Patentamt**

**European Patent Office**

**Office européen des brevets**

(19)

(11) Veröffentlichungsnummer: **0 278 323 B1**

## (12) EUROPÄISCHE PATENTSCHRIFT

(45) Veröffentlichungstag der Patentschrift: **21.08.91**

(51) Int. Cl.⁵: **F16F 3/10**

(21) Anmeldenummer: **88101137.3**

(22) Anmeldetag: **27.01.88**

(54) **Schwingungsisolator.**

(30) Priorität: **05.02.87 DE 3703483**

(43) Veröffentlichungstag der Anmeldung:
**17.08.88 Patentblatt 88/33**

(45) Bekanntmachung des Hinweises auf die
Patenterteilung:
**21.08.91 Patentblatt 91/34**

(84) Benannte Vertragsstaaten:
**DE FR GB IT**

(56) Entgegenhaltungen:
**DE-A- 1 020 215    DE-C- 814 362**
**FR-A- 2 122 934    FR-A- 2 435 631**
**US-A- 1 855 769    US-A- 3 489 402**
**US-A- 4 355 791**

(73) Patentinhaber: **Messerschmitt-Bölkow-Blohm**
**Gesellschaft mit beschränkter Haftung**
**Robert-Koch-Strasse**
**W-8012 Ottobrunn(DE)**

(72) Erfinder: **Bschorr, Oskar, Dr.**
**Keplerstrasse 11**
**W-8000 München 80(DE)**

**Beschreibung**

Die Erfindung betrifft einen Schwingungsisolator mit mindestens einer kappenförmigen Feder aus einem Material mit weitgehend frequenzkonstantem Elastizitätsmodul und einem S-förmigen Verlauf der Federkennlinie sowie mit mindestens einer, auf der konvexen Seite der Feder angeordneten Zwischenlage aus einem Material mit frequenzprogressivem Elastizitätsmodul , wobei zwischen der Feder und der Zwischenlage ein radialer Spalt vorgesehen ist, derart, daß bei zu- bzw. abnehmender statischer Belastung des Schwingungsisolators die Kontaktfläche zwischen der Feder und der Zwischenlage zu- bzw. abnimmt.

Aus der DE-C- 814 362 ist eine Gummistahlfeder bekannt, bei der eine kappenförmige Feder mit einer Gummischicht versehen ist und wobei zwei solcher Federn mit Gummibeschichtung zu einem linsenförmigen Gebilde zusammengefügt sind. Bei dieser Einrichtung kommt der Stahlfeder die eigentliche Federarbeit und dem Gummi die eigentliche Dämpfungsarbeit zu. Die Feder besitzt die Charakteristik einer Tellerfeder, so daß diese Einrichtung stark lastabhängig ist. Da der Elastizitätsmodul von Gummi mit der Frequenz ansteigt, also frequenzprogressiv ist, kommt bei dieser Einrichtung noch eine mehr oder weniger frequenzprogressive Federung durch die Gummibeschichtung hinzu. Im allgemeinen ist also die Federkonstante derartiger Gummistahlfedern sowohl frequenz- als auch lastabhängig. Somit haben derartige Einrichtungen prinzipiell den Nachteil, daß die Schwingungsisolierung um so größer ist,je kleiner die Feder-konstante ist, wobei jedoch aus Stabilitätsgründen eine Mindestfederhärte nicht unterschritten werden kann. Je weicher die Feder ist, desto größer ist die statische Einfederung und desto mehr hebt oder senkt sich beispielsweise das Höhenniveau einer Maschine bei Änderung der statischen Vorlast. Als weiterer Nachteil kommt hinzu, daß eine derartige Gummistahlfeder zusammen mit der Maschinenmasse ein Schwingsystem bildet. Im Bereich der Schwingresonanz kommt es zu einer Verschlechterung der Isolierwirkung

Aus der FR-A-2 435 631 ist ein Dämmelement zur Schwingungsisolierung bekannt, bei welchem mehrere, mit Ausbauchungen versehene Blechplatten übereinander geschichtet sind, so daß sich für den Plattenstapel bei Belastung ein S-förmiger Verlauf der Federkennlinie ergibt. Das Minimum dieser Federkonstanten wird auf die Grundlast, mit welcher der Plattenstapel belastet wird, eingestellt. Diese Anordnung vermag nur bei einer konstanten, vorher ausgewählten Vorlast optimale Schwingungsisolation zu gewährleisten. Ändert sich funktionsbedingt die Vorlast, z.B. bei einer Werkzeugmaschine durch Aufnahme des Werkstückes oder , bei Fahrzeugen aufgrund von Beschleunigungen, so wandert der Arbeitspunkt aus dem Optimum und zwar um so schneller, je niedriger die Federkonstante ist. Es ist daher in dieser Schrift ein Lösungsweg angegeben, mit welchem das Dämmelement wenigstens für zwei definierte Belastungszustände eine ausreichende Schwingungsisolierung gewährleistet. Demgegenüber hat sich die vorliegende Erfindung die Aufgabe gestellt, einen Schwingungsisolator zu schaffen, der bei beliebigen Belastungszuständen Innerhalb eines weiten Bereiches eine optimale Schwingungsisolierung gewährleistet.

Diese Aufgabe erfüllt ein nach dem Patentanspruch 1 ausgebildeter Schwingungsisolator.

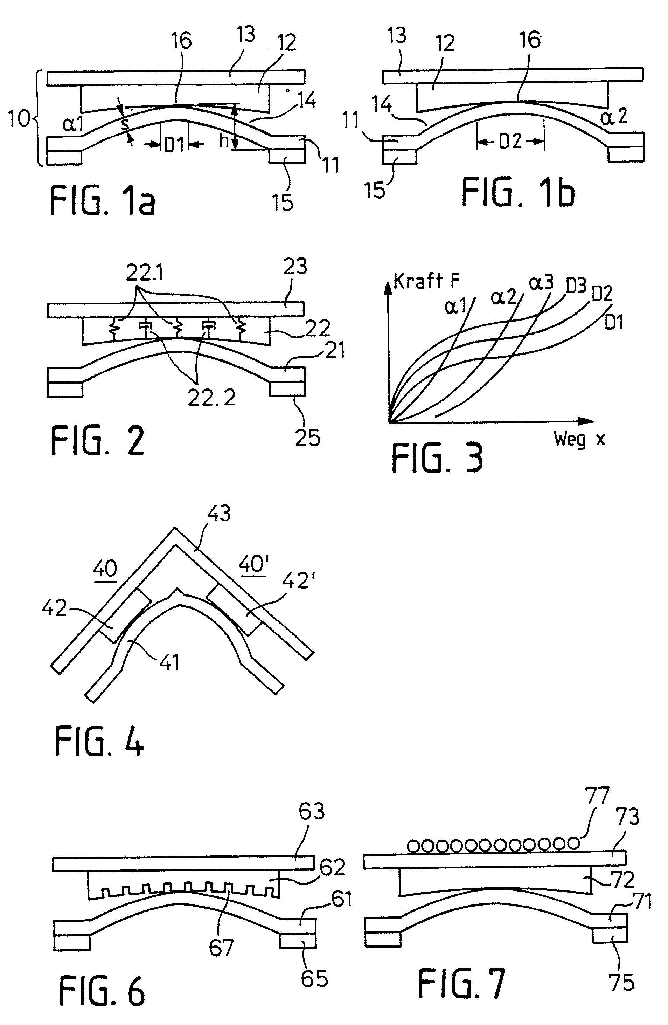

Nach den klassischen Ersatzmodellen kann eine reine Gummiplatte durch parallel geschaltete Feder- und Dämpfungselemente beschrieben werden (siehe Fig. 2). Aus dieser Vorstellung heraus ergibt sich auch das Frequenzverhalten von Gummi: Bei tiefen Frequenzen wirken praktisch nur die Federn 22.1, bei hohen Frequenzen dominieren die Dämpfungen 22.2 und bewirken eine Versteifung. Bei einer Erhöhung der statischen Last wird bei dem erfindungsgemäßen Schwingungsisolator die Zwischenlage 22 aus gummiartigem Material weiter komprimiert und die Kontaktfläche zwischen der Feder 21 und der Zwischenlage 22 vergrößert. Bei einer raschen Kraftänderung dagegen verhält sich die Zwischenlage 22 wie ein starrer Körper und es kommt im Extremfall zu keiner Vergrößerung der Auflagefläche. In diesem Fall wird also die Bewegung vollständig auf die Feder 21 übertragen, die bei dem vorgesehenen S-förmigen Verlauf der Federkennlinie sowie bei entsprechend dimensionierter statischer Vorlast im Bereich ihrer geringsten Federkonstanten bewegt wird. Die Feder 21 verhält sich also in diesem Bereich extrem weich und führt zu einer entsprechend guten Schwingungsisolierung.

Dieser Sachverhalt ist nochmals anhand der Kraft/Weg-Verläufe in Fig. 3 dargestellt. Dabei sind die Federkennlinien der erfindungsgemäß vorgesehenen Feder 21 in Abhängigkeit der jeweils konstant gehalte-nen Durchmesser $D_1$, $D_2$ und $D_3$ der Auflagefläche zur Zwischenlage 22 dargestellt. Mit zunehmender Auflagefläche wird die Tragkraft größer; alle Kraft/Weg-Kurven haben daher einen ähnlichen, S-förmigen Verlauf mit einem flachen Plateau im Bereich des Wendepunktes.

Bei einer langsamen, quasi statischen Kraftänderung wirken im Ersatzmodell der Zwischenlage 22 lediglich die Federn 22.1 und es kommt zu einer Vergrößerung der Kontaktfläche zu Feder 21. Die Zunahme der Kontaktfläche bewirkt eine Zunahme der Federsteifigkeit der Feder 21, wobei diese Zunahme um so größer ist, je kleiner Öffnungswinkel $\alpha$ des Spaltes zwischen der Feder und der Zwischenlage ist. In Fig. 3 ist daher

$\alpha_1 < \alpha_2 < \alpha_3$.

Bei raschen, dynamischen Kraftänderungen dagegen wirkt die Zwischenlage 22 wie eine starre Platte mit nur geringfügiger Vergrößerung der Kontaktfläche. Die dynamischen Kräfteänderungen verlaufen so entlang den Linien D = konstant, die im Bereich des Plateaus nur eine geringe Steigung, d.h. eine kleine Federkonstante aufweist.

Die Erfindung wird im folgenden anhand mehrerer, in den Figuren teilweise schematisch dargestellter Ausführungsbeispiele näher beschrieben. Es zeigen:

Fig. 1a und b einen Querschnitt durch einen Schwingungsisolator bei unterschiedlichen Belastungszuständen,

Fig. 2 einen Querschnitt eines schwingungsdynamischen Ersatzmodells eines Schwingungsisolators gemäß Fig.1,

Fig. 3 ein Kraft/Weg-Diagramm für verschiedene Belastungen eines Schwingungsisolators gemäß Fig. 1,

Fig. 4 einen Querschnitt durch einen Schwingungsisolator mit Wirksamkeit in zwei bzw. drei Dimensionen,

(Fig. 5 entfällt),

Fig. 6 einen Querschnitt durch einen Schwingungsisolator mit zusätzlichem Freiheitsgrad,

Fig. 7 einen Querschnitt durch einen weiteren Shwingungsisolator mit zusätzlichem Freiheitsgrad,

Fig. 8 einen Querschnitt durch einen Schwingungsisolator mit parallel geschalteten Federn,

Fig. 9 einen Querschnitt durch einen Schwingungsisolator mit hintereinander geschalteten Federn,

Fig. 10 einen Querschnitt durch einen Schwingungsisolator mit Flüssigkeitsdämpfung,

Fig. 11 einen Querschnitt durch einen weiteren Schwingungsisolator mit Flüssigkeitsdämpfung,

Fig. 12 einen Querschnitt durch einen Schwingungsisolator mit zusätzlichem Schwingungsabsorber,

Fig. 13 einen Querschnitt durch einen weiteren Schwingungsisolator mit zusätzlichem Schwingungsabsorber und

Fig. 14 einen Querschnitt durch einen band- oder flächenförmigen Schwingungsisolator.

Bei dem in den Fig. 1a und b dargestellten Ausführungsbeispiel ist auf der konvexen Seite einer kalottenförmigen Feder 11, z.B. aus Federstahl, eine Zwischenlage 12 derart angeordnet, daß diese bei einer definierten Vorlast mit der Feder 11 eine zentrale Kontaktfläche 16 mit dem Durchmesser D1 aufweist und um diese Kontaktfläche 16 herum einen radialen Spalt 14 mit der Feder 11 bildet. Bei einem Kontaktflächendurchmesser D1 betrage der Spaltwinkel $\alpha 1$. Diese Anordnung ist federseitig mit einem Fußteil 15 und zwischenlagenseitig mit einer Deckplatte 13 zur Aufnahme des schwingungsmäßig zu isolierenden Teiles versehen.

Bei zunehmender Belastung vergrößert sich die Kontaktfläche 16 bzw. deren Durchmesser D2 und zusätzlich der Spaltwinkel $\alpha 2$. Dabei ist die Zunahme des Durchmessers D und damit die der Federsteifigkeit um so größer, je kleiner der Spaltwinkel $\alpha$ ist, wobei dieser mit zunehmender statischer Belastung wächst.

Die Eigenschaften des Schwingungsisolators hängen entscheidend von Material und Form der Zwischenlage 12 ab. Neben Gummi eignen sich alle Materialien, deren Elastizitätsmodul mit der Frequenz ansteigt. Mit der erfindungsgemäß vorgesehenen Konstruktion eines Schwingungsisolators wird eine Invertierung dieses Frequenzverhaltens erzielt. Das Verhältnis von statischer zu dynamischer Federkonstante ist dabei um so größer, je größer die spektrale Progression des Elastizitätsmoduls ist. Maßgebend sind ebenfalls die absolute Größe des Elastizitätsmoduls und die sogenannte Querkontraktion. Weiche Gummimaterialen mit hoher Querkontraktion ergeben bei gleicher Geometrie eine rasche Durchmesserzunahme der Kontaktfläche 16. Mit einer Anisometrie von Materialen steht schließlich ein weiterer Beeinflussungsparameter zur Verfügung. Eine derartige Anisometrie, also z.B. eine Veränderung der radialen Querkontraktion, läßt sich durch ein faserverstärktes Material erzielen.

Von ähnlicher Bedeutung wie die Materialeigenschaft ist auch die Geometrie der Zwischenlage 12. Als nichtlinearer Effekt beeinflußt der Verlauf der Spaltöffnung 14 in empfindlicher Weise die schwingungsisolierende Wirkung. Dieser Verlauf läßt sich am sinnfälligsten und einfachsten durch Ausgießen mit Wachs, Gips oder Kunststoff des Spaltes 14 bei der vorgesehenen Mindestbelastung des Schwingungsisolators 10 gewinnen. Dieser so gewonnen Form wird zusätzlich ein längsförmiger, konzentrischer Keilspalt mit einem konstanten oder auch radial veränderlichen Keilwinkel überlagert. Eine nicht dargestellte Möglichkeit, die Spaltöffnung 14 unter Verwendung einer Gummiplatte konstanter Dicke einzustellen besteht darin, daß zwischen der Deckplattte 13 und der Gummiplatte 12 Distanzringe untergelegt werden.

Die kappenförmige Feder 11, die im wesentlichen die Charakteristik einer Tellerfeder hat kann entweder, wie eine Tellerfeder, einen kegelstumpfförmigen Konturenverlauf aufweisen oder auch als geschlossene Kugelkalotte mit konstanter oder auch nicht konstanter, z.B. nach innen abnehmender Wandstärke ausgebildet sein oder auch nichtkreisförmige Grundrissformen haben. Allen derartigen Federn gemeinsam ist ein nichtlinearer, S-förmiger Kraft/Weg-Verlauf mit einem Minimum der Federkonstanten im Bereich des Wendepunktes und einer statischen Traglast, die um so größer je weiter sich die Umrandung der Kontaktfläche 16 radial nach außen verlagert. Zur Vermeidung von Beuleffekten ist es notwendig, daß die Federkennlinie nicht negativ wird. Dies wird erreicht, wenn sich, abhängig von der Konturenform das Verhältnis zwischen Wölbungshöhe h und Wandstärke s etwa zwischen 0,5 und 5 bewegt. Bei einer typischen Tellerfeder ist dies bei einem Verhältnis $h/_s = \sqrt{2}$ gegeben.

Der Aufbau der weiteren Ausführungsbeispiele von Schwingungsisolatoren ist in allen Fällen ähnlich, wobei die Grundbestandteile jeweils durch die gleiche Endziffer gekennzeichnet sind. Dabei bedeuten

```
.0=Schwingungsisolator        .4=Spaltöffnung
.1=Feder                      .5=Fußteil
.2=Zwischenplatte             .6=Kontaktfläche
.3=Deckplatte
```

Während ein Schwingungsisolator gemäß Fig. 1 im wesentlichen für Maschinen geeignet ist, bei denen die statische Maschinenlast und die Störschwingungen nur in vertikaler Richtung, d.h. senkrecht auf die Deckplatte 13 einwirken, ist die Ausführung gemäß Fig. 4 auch für wechselnde Richtungen der Grundlast, wie z.B. bei Fahrzeugen, geeignet. Dabei ist die Deckplatte als Winkel 43 ausgebildet, so daß zwei im rechten Winkel zueinander angeordnete Schwingungsisolatoren 40 und 40' entstehen. Die Feder 41 ist entsprechend aus zwei rechtwinklig angeordneten Kalotten zusammengesetzt. Analog dazu läßt sich ein dreidimensional wirkender Schwingungsisolator mit drei im rechten Winkel zueinander angeordneten Isolatoren bilden, wobei die Deckplatte dann die Form einer rechtwinkligen Ecke hat.

Wenn die Richtung der statischen Kraft im wesentlichen erhalten bleibt, die Störschwingungen aber eine davon abweichende Kraftrichtung haben, so ist die Verwendung der in den Fig. 6 und 7 dargestellten Schwingungsisolatoren von Vorteil. Dabei weist das Ausführungsbeispiel gemäß Fig. 6 Noppen 57 an der federseitigen Oberfläche der Zwischenlage 62 auf. Analog dazu sind gemäß Fig. 7 zwischen der Deckplatte 73 und der nicht dargestellten, schwingungsmäßig zu isolierenden Last Kugeln 77 angeordnet. Diese Ausführungsformen haben für Kräfte parallel zu den Deckplatten 63 bzw. 73 eine sehr geringe Federsteifigkeit und somit eine entsprechend große schwingungsisolierende Wirkung.

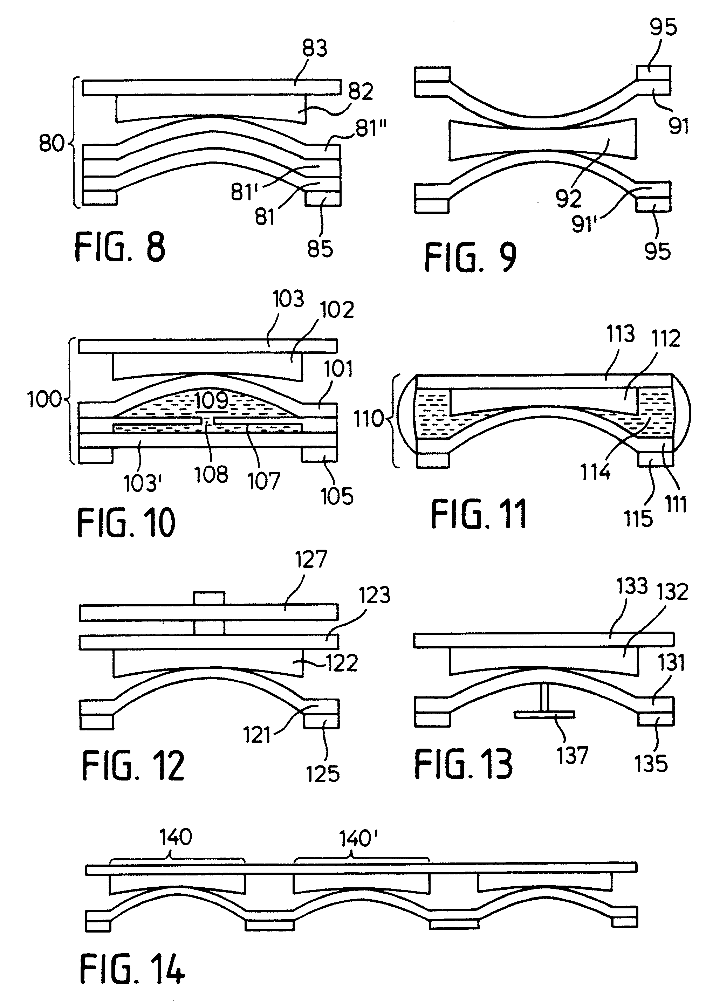

Bei den Ausführungsbeispielen gemäß Fig. 8 und 9 sind jeweils mehrere kalottenförmige Federn 81, 81',81" bzw. 91 und 91' entweder parallel geschaltet und bewirken dadurch eine Vergrößerung der Traglast oder hintereinander geschaltet und bewirken dadurch eine Vergrößerung des Federweges.

In den Fig. 10 und 11 sind Ausführungsformen von Schwingungsisolatoren 100 und 110 dargestellt,die zusätzlich eine schwingungsdämpfende Wirkung haben. Bei dem in Fig. 10 dargestellten Ausführungsbeispiel wird dazu eine ölgefüllte Kammer 109 durch eine Zwischenwand 107 mit einer kleinen Durchströmöffnung 108 in zwei Bereiche geteilt, wobei die Kammer zum einen durch die Feder 101 und zum anderen durch eine zusätzliche Deckplatte 103' abgeschlossen ist. Bei dem Ausführungsbeispiel gemäß Fig. 11 befindet sich die Dämpfungsflüssigkeit im Bereich der Spaltöffnung 114. Bei dynamischer Belastung dieser Schwingungsisolatoren 100 und 110 wird eine Teil der Bewegungsenergie durch Reibung in der hin- und herströmenden Flüssigkeit absorbiert.

Die Ausführungsformen gemäß Fig. 12 und 13 weisen zusätzliche Schwingungsabsorber 127 bzw. 137 auf, welche Schwingungen, insbesondere Körperschallschwingungen absorbieren. Derartige, möglichst in einem breiten Frequenzbereich wirkende Schwingungsabsorber sind aus der VDI-Richtlinie 3727 bekannt.

Bei dem in Fig. 13 dargestellten Ausführungsbeispiel sind mehrere Schwingungsisolatoren 140, 140',.... gemäß Fig.1 derart nebeneinander angeordnet und miteinander verbunden, daß ein band- bzw. flächenförmiges Schwingungsisolatorgebilde entsteht.

## Patentansprüche

1. Schwingungsisolator mit mindestens einer kappenförmigen Feder (...1) aus einem Material mit weitgehend frequenzkonstantem Elastizitätsmodul und einem S-förmigen Verlauf der Federkennlinie sowie mit mindestens einer, auf der konvexen Seite der Feder angeordneten Zwischenlage (...2) aus einem Material mit frequenzprogressivem Elastizitätsmodul , wobei zwischen der Feder und der Zwischenlage ein radialer Spalt (14) vorgesehen ist, derart, daß bei zu- bzw. abnehmender statischer Belastung des Schwingungsisolators die Kontaktfläche zwischen der Feder und der Zwischenlage zu- bzw. abnimmt, **dadurch gekennzeichnet,** daß die Zwischenlage (...2) auf der der Feder (...1) zugewandten Seite eine

4

im wesentlichen konkav gekrümmte Oberfläche aufweist.

2. Schwingungsisolator nach Anspruch 1 **dadurch gekennzeich- net,** daß bei einer kalottenförmigen Feder (..1) das Verhältnis zwischen Wölbungshöhe (h) und der Wandstärke (s) 0,5 bis 5 beträgt.

3. Schwingungsisolator nach Anspruch 1 oder 2, **dadurch gekennzeichnet,** daß die Oberfläche der Zwischenlage (62) Einschnitte (67) aufweist.

4. Schwingungsisolator nach einem der Ansprüche 1 bis 3 **dadurch gekennzeichnet,** daß der Spalt (..4) zwischen der Feder (..1) und der Zwischenlage (..2) einen Keilwinkel $\alpha$ mit der Bedingung $0 < \alpha \leq 20^\circ$ aufweist.

5. Schwingungsisolator nach einem der Ansprüche 1 bis 4 **dadurch gekennzeichnet,** daß eine Zwischenlage (92) zwischen zwei Federn (91, 91') angeordnet ist.

6. Schwingungsisolator nach einem der Ansprüche 1 bis 5 **dadurch gekennzeichnet,** daß an dem Schwingungsisolator ein Schwingungsabsorber (127, 137) befestigt ist.

## Claims

1. A vibration isolator having at least one cap-shaped spring (...1) made of a material having a largely frequency-constant modulus of elasticity and an S-shaped spring characteristic course and having at least one intermediate layer (...2) arranged on the convex side of the spring and made of a material having a frequency-progressive modulus of elasticity, a radial gap (14) being provided between the spring and the intermediate layer, in such a way that upon increasing or respectively decreasing static loading of the vibration isolator the contact surface area between the spring and the intermediate layer increases or respectively decreases, characterised in that the intermediate layer (...2) on the side facing the spring (...1) has a substantially concavely curved surface.

2. A vibration isolator according to claim 1, characterised in that in the case of a cup-shaped spring (..1) the ratio between arching height (h) and the wall thickness (s) amounts to 0.5 to 5.

3. A vibration isolator according to claim 1 or 2, characterised in that the surface of the intermediate layer (62) has notches (67).

4. A vibration isolator according to one of claims 1 to 3, characterised in that the gap (..4) between the spring (..1) and the intermediate layer (..2) has a wedge angle $\alpha$ with the condition $0 < \alpha \leq 20^\circ$.

5. A vibration isolator according to one of claims 1 to 4, characterised in that an intermediate layer (92) is arranged between two springs (91, 91').

6. A vibration isolator according to one of claims 1 to 5, characterised in that a vibration absorber (127, 137) is fastened to the vibration isolator.

## Revendications

1. Isolateur de vibrations comprenant au moins un ressort (..1) en forme de calotte en matériau ayant un module d'élasticité sensiblement constant vis-à-vis de la fréquence et une courbe caractéristique de ressort en forme de S, et comprenant au moins un élément intermédiaire (..2) disposé sur le côté convexe du ressort, en matériau ayant un module d'élasticité progressif avec la fréquence, un interstice (14) radial étant prévu entre le ressort et l'élément intermédiaire de manière telle que lors de l'augmentation ou de la diminution de la charge statique de l'isolateur de vibrations, la surface de contact entre le ressort et l'élément intermédiaire augmente ou diminue, caractérisé par le fait que sur sa face en regard du ressort (..1) l'élément intermédiaire (..2) présente une surface sensiblement concave.

2. Isolateur de vibrations selon la revendication 1, caractérisé par le fait que pour un ressort (..1) en forme de calotte le rapport entre la hauteur de courbure (h) et l'épaisseur de paroi (s) est de 0,5 à 5.

3. Isolateur de vibrations selon la revendication 1 ou 2, caractérisé par le fait que la surface de l'élément intermédiaire (62) présente des encoches (67).

4. Isolateur de vibrations selon l'une des revendications 1 à 3, caractérisé par le fait que l'interstice (..4) entre le ressort (..1) et l'élément intermédiaire (..2) présente un angle $\alpha$ avec la condition $0 < \alpha \leqq 20°$.

5. Isolateur de vibrations selon l'une des revendications 1 à 4, caractérisé par le fait qu'un élément intermédiaire (92) est disposé entre deux ressorts (91, 91').

6. Isolateur de vibrations selon l'une des revendications 1 à 5, caractérisé par le fait qu'un absorbeur de vibrations (127, 137) est fixé sur l'isolateur de vibrations.

FIG. 1a

FIG. 1b

FIG. 2

FIG. 3

FIG. 4

FIG. 6

FIG. 7

FIG. 8

FIG. 9

FIG. 10

FIG. 11

FIG. 12

FIG. 13

FIG. 14